# EUROPEAN PATENT APPLICATION

(11) **EP 3 579 637 A1**
(43) Date of publication of application: **11.12.2019**
(21) Application number: 18748237.7
(22) Date of filing: 23.01.2018
(51) Int. Cl.: H04W 72/04

(54) **BASE STATION AND USER DEVICE**

(30) Priority: 03.02.2017 JP 2017019116
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/002009
(87) International publication number: WO 2018/143018

(57) **Abstract**

Techniques for implementing resource sharing are disclosed in which radio resources for transmitting control information and data information are shared. An aspect of the present invention relates to a base station including a scheduling unit configured to assign control information and data information in units of a resource assignment unit in a common resource area, wherein the control information and the data information are to be transmitted to a user equipment in the common resource area; and a resource assignment indication unit configured to transmit resource assignment information of the data information to the user equipment by the control information.

## Description

### TECHNICAL FIELD

The present invention relates to a radio communication system.

### BACKGROUND ART

Presently, specifications for a fifth generation (5G) or NR (New RAT) system are being designed as a next radio communication system of LTE (Long Term Evolution) and LTE-Advanced. In the NR, it is required to further enhance spectral efficiency compared with the LTE.

In the LTE, a shortened TTI (Transmission Time Interval) is used for enhancing spectral efficiency, and control signals and data signals need to be multiplexed into the TTI efficiently. According to the LTE, a search space specific to a user equipment (UE) (UE-SS) is defined, and in a downlink control channel (DL-CCH) area, a set of DL-CCH candidates is defined as the UE-SS. The DL CCH area is defined as being common (PDCCH) or specific to a UE group (EPDCCH). In the DL-CCH area, the DL CCH candidate for a UE is derived from a C-RNTI (Cell-Radio Network Temporary Identifier), and the user equipment monitors the DL CCH candidates in the UE-SS and determines which of the DL CCH candidates is for the user equipment based on the C-RNTI. Even if the UE-SSs for different units of user equipment overlap, the respective units of user equipment can detect their own DCI (Downlink Control Information) correctly.

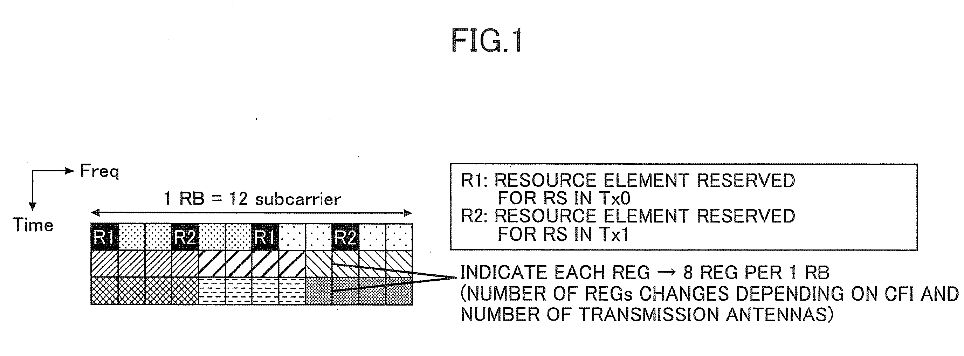

In the LTE, a PCFICH (Physical Control Format Indicator Channel), a PHICH (Physical Hybrid ARQ Indicator Channel) and a PDCCH (Physical Downlink Control Channel) are assigned in a downlink control channel area, and resource assignment is performed by using a resource element group (REG) consisting of four resource elements (REs) as a minimum unit. For example, in the case where 2Tx and 3 OFDM symbols are assigned in the downlink control channel area (CFI (Control Format Indicator) = 3), the resource element groups are arranged as illustrated in FIG. 1. In the illustrated example, eight resource element groups are included in one resource block.

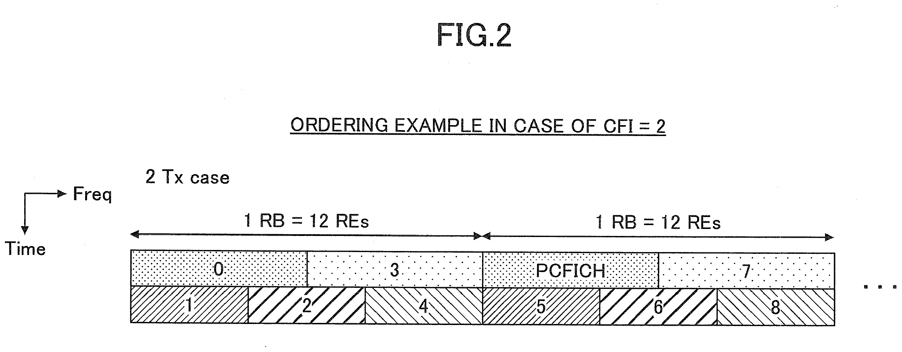

In the PDCCH in the LTE, DCI is transmitted to respective connecting units of user equipment. The PDCCH is mapped to radio resources other than the PCFICH and the PHICH in radio resources consisting of one or more OFDM (Orthogonal Frequency Division Multiplexing) symbols from a start symbol specified in the CFI in each subframe. The minimum assignment unit of the PDCCH in the LTE is a CCE (Control Channel Element) . In order to assign the PDCCH, the resource element groups other than the resource elements assigned to the PCFICH and the PHICH are numbered as illustrated in the example in FIG. 2 (the case of CFI = 2), and nine consecutive resource element groups (referred to as CCEs) are the minimum assignment unit of the PDCCH.

An aggregation level may be used as one resource assignment method for the PDCCH. Namely, the aggregation level determines how many CCEs are assigned to one DCI. There are four aggregation levels, which are 1, 2, 4 and 8, and each of the aggregation levels corresponds to the number of assigned CCEs. The aggregation level is configured for each user equipment based on a CQI (Channel Quality Indicator) fed back from the user equipment. Typically, if reception quality is good, the aggregation level is set to a small value, and if the reception quality is not good, the aggregation level is set to a large value.

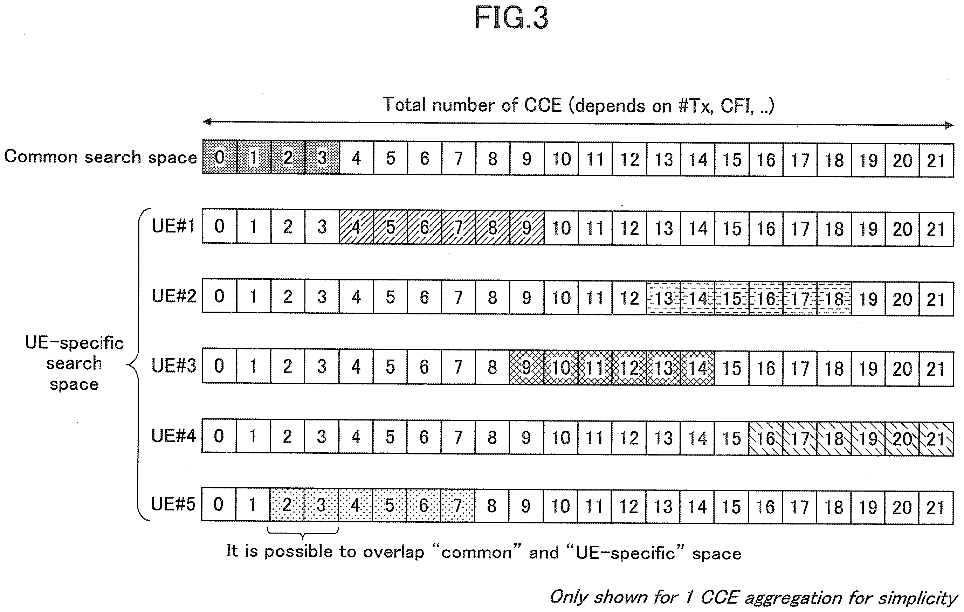

As another resource assignment method for the PDCCH, a search area referred to as a search space is configured so as to reduce the number of blind searches performed by a user equipment for the downlink control channel area. In the LTE, as illustrated in FIG. 3, a common search space and a UE specific search space are configured. The common search space is an area commonly searched by all units of user equipment. In the common search space, as illustrated, CCEs can be assigned between 0th and 15th sections, and the aggregation level is limited to 4 or 8 (that is, four or eight CCEs). Whereas, the UE specific search space is an area individually searched by respective units of user equipment. In the UE specific search space, as illustrated, a CCE assignment range is uniquely configured for each user equipment based on a subframe number and a user equipment identifier (UE-ID), and the aggregation level is set to 1, 2, 4 or 8 without being limited. As illustrated, the common search space and the UE specific search space may overlap with each other.

A PDSCH in the LTE is assigned per the unit of PRG (Precoding Resource Block Group) including several PRBs (Physical Resource Blocks) in a downlink data channel area, and resource assignment of the PDSCH is signaled in DCI. Note that the number of PRBs in the PRG depends on a system band and one PRG consists of three PRBs for the bandwidth of 10 MHz. There are multiple resource allocation (RA) types for how to assign the PDSCH to a PRG. In RA type 0, a bitmap is transmitted for indicating presence or absence of PDSCH mapping in the PRG. In RA type 1, the PRG is divided into PRG subsets, and assignment of the PDSCH within the PRG subset is transmitted. In RA type 2, the PDSCH is mapped to consecutive PRGs.

### SUMMARY OF INVENTION

### [PROBLEM TO BE SOLVED BY THE INVENTION]

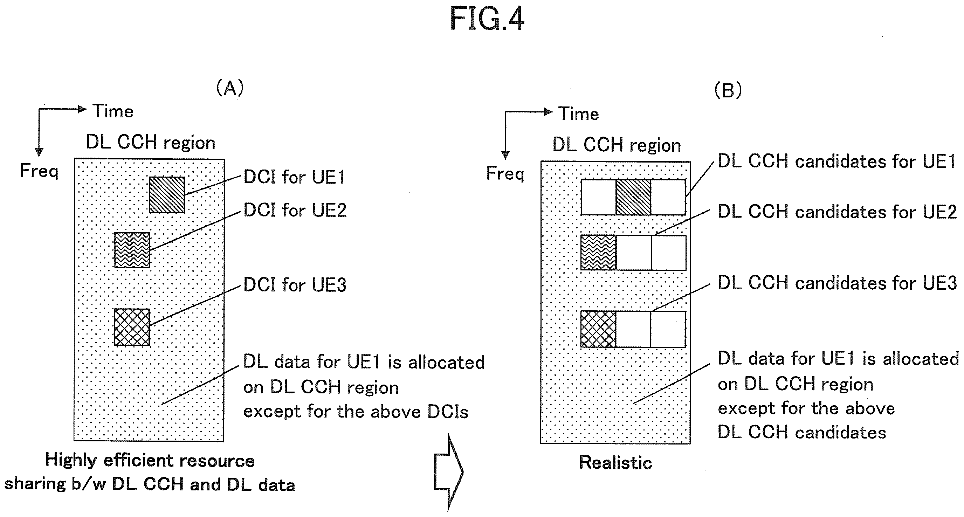

In the LTE, as stated above, the PDCCH and the PDSCH are assigned by different resource assignment methods. In the NR, in order to further enhance efficiency of radio resources, sharing of radio resources between a downlink control channel and a downlink data channel (resource sharing) has been studied, as illustrated in FIG. 4. In this case, each user equipment is unable to detect DCI for other units of user equipment, and the user equipment may fail to detect its own DCI. In order to avoid erroneous decoding of the downlink control channel and the downlink data channel, the downlink control channel and the downlink data channel are required to be clearly separated.

For example, as illustrated in FIG. 4A, in a downlink control channel area, the DCI is assigned for respective units of user equipment (UE1, UE2 and UE3), and downlink data for UE 1 is assigned to radio resources other than the DCI. As a result, efficient resource sharing between the downlink control channel and the downlink data channel is achieved. However, as a more practical case, as illustrated in FIG. 4B, radio resources for downlink control channel candidates may be configured for respective units of user equipment, and the DCI may be transmitted in any of these radio resources.

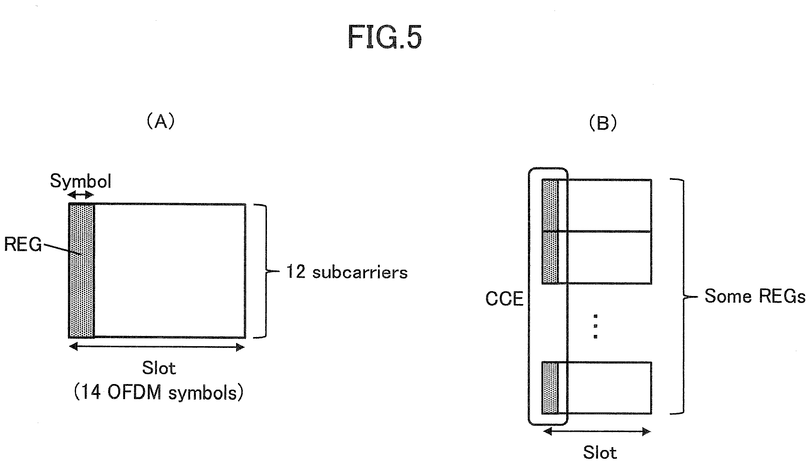

In the NR, as illustrated in FIG. 5, it is agreed that PDCCH candidates are composed of multiple CCEs and each of the CCEs is composed of multiple REGs. Additionally, it is agreed that each REG is one resource block within one OFDM symbol. In other words, the PDCCH in the NR is assigned based on the CCE and the REG as defined in this manner.

In light of the above-described problems, an object of the present invention is to provide techniques for implementing resource sharing in which radio resources are shared for transmission and reception of control information and data information.

### [MEANS FOR SOLVING THE PROBLEM]

In order to solve the above-described problem, an aspect of the present invention relates to a base station including a scheduling unit configured to assign control information and data information in units of a resource assignment unit in a common resource area, wherein the control information and the data information are to be transmitted to a user equipment in the common resource area; and a resource assignment indication unit configured to transmit resource assignment information of the data information to the user equipment by the control information..

### [ADVANTAGE OF THE INVENTION]

According to the present invention, the resource sharing can be achieved in which radio resources for transmitting and receiving control information and data information are shared.

### BRIEF DESCRIPTION OF DRAWINGS

FIG. 1 is a diagram for illustrating exemplary assignment of resource element groups (REGs) in the LTE;
FIG. 2 is a diagram for illustrating exemplary assignment of control channel elements (CCEs) for a PDCCH in the LTE;
FIG. 3 is a diagram for illustrating a common search space and a UE specific search space in the LTE;
FIG. 4 is a diagram for illustrating exemplary assignment of downlink control information and downlink data information;
FIG. 5 is a diagram for illustrating exemplary assignment of REGs and CCEs for a PDCCH in the NR;
FIG. 6 is a schematic diagram for illustrating a radio communication system according to one embodiment of the present invention;
FIG. 7 is a block diagram for illustrating a functional arrangement of a base station according to one embodiment of the present invention;
FIG. 8 is a diagram for illustrating resource assignment information according to one embodiment of the present invention;
FIG. 9 is a block diagram for illustrating a functional arrangement of a user equipment according to one embodiment of the present invention;
FIG. 10 is a diagram for illustrating resource assignment information according to one embodiment of the present invention;
FIG. 11 is a diagram for illustrating resource assignment information according to one embodiment of the present invention;
FIG. 12 is a diagram for illustrating resource assignment information according to one embodiment of the present invention; and
FIG. 13 is a block diagram for illustrating a hardware arrangement of a user equipment and a base station according to one embodiment of the present invention.

### EMBODIMENTS OF THE INVENTION

Embodiments of the present invention are described below with reference to the drawings.

In the following embodiments, a base station and a user equipment are disclosed that use resource sharing techniques where radio resources for transmitting and receiving control information and data information are shared. According to embodiments as described below, the base station assigns the control information and the data information in units of a resource assignment unit (such as a CCE and a REG) in a common resource area (such as a downlink control channel area), where the control information and the data information are to be transmitted to the user equipment in the common resource area, and transmits, to the user equipment, resource assignment information of the data information by the control information. The user equipment extracts the resource assignment information from the received control information and receives the data information in the common resource area in accordance with the extracted resource assignment information.

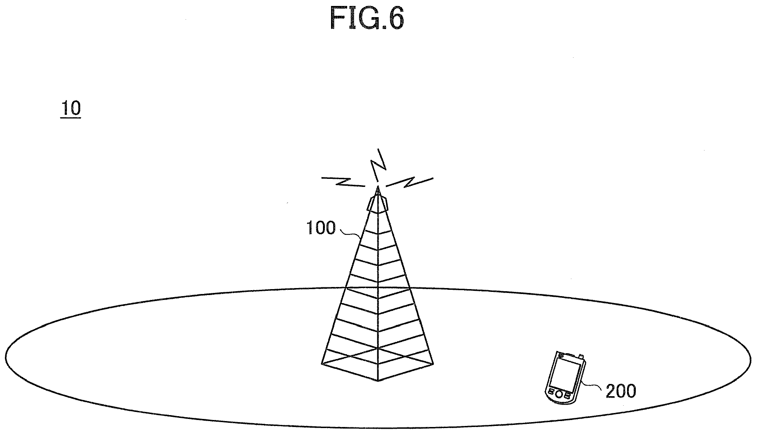

First, a radio communication system according to an embodiment of the present invention is described with reference to FIG. 6. FIG. 6 is a schematic diagram for illustrating a radio communication system according to one embodiment of the present invention.

As illustrated in FIG. 6, a radio communication system 10 has a base station 100 and a user equipment 200. In the following embodiments, the radio communication system 10 is a radio communication system conforming to standards on and subsequent to 3GPP Rel-14 (for example, a 5G or NR system) . However, the present invention is not limited to it, and it may be any other radio communication system to which resource sharing techniques can be applied in which radio resources for transmitting and receiving control information and data information are shared.

The base station 100 provides one or more cells, and the base station 100 executes radio communication with the user equipment 200. In the illustrated embodiment, only the single base station 100 is illustrated. However, in general, a large number of base stations 100 are arranged to cover a service area of the radio communication system 10.

The user equipment 200 is any appropriate information processing device with radio communication functionalities such as a smartphone, a mobile phone, a tablet, a wearable terminal and a communication module for M2M (Machine-to-Machine), and the user equipment 200 wirelessly connects to the base station 100 to use various communication services served from the radio communication system 10.

In the present embodiment, downlink data information is transmitted together with downlink control information (such as DCI) in a resource area, such as a downlink control channel area. Since the downlink control information is transmitted in units of a resource assignment unit used in the downlink control channel area, such as a CCE or a REG, the downlink data information in the downlink control channel area is also transmitted in units of the resource assignment unit, such as the CCE or the REG.

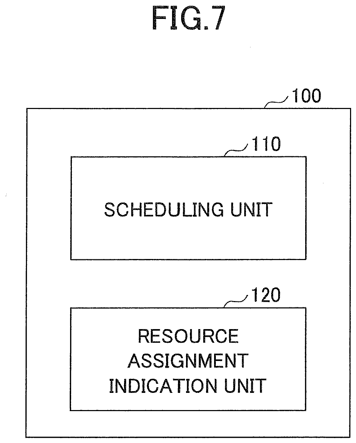

Next, a base station according to an embodiment of the present invention is described with reference to FIG. 7. FIG. 7 is a block diagram for illustrating a functional arrangement of the base station according to one embodiment of the present invention.

As illustrated in FIG. 7, the base station 100 is provided with a scheduling unit 110 and a resource assignment indication unit 120.

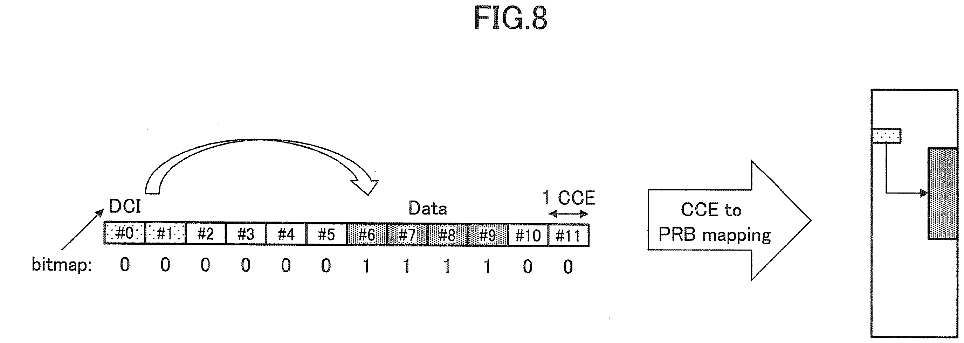

The scheduling unit 110 assigns control information and data information to be transmitted to the user equipment 200 in a common resource area in units of a resource unit in the resource area. Specifically, the scheduling unit 110 schedules downlink control information (DCI) and a downlink data channel in a downlink control channel area in units of CCE. Typically, as illustrated in FIG. 8, the scheduling unit 110 assigns the DCI to any number of CCEs from the leading CCE (in the illustrated example, CCE#0 and CCE#1) and the downlink data channel to CCEs following the DCI (in the illustrated example, CCE#6 to CCE#9).

In the LTE, the downlink data channel is assigned in units of a PRG formed of a plurality of PRBs, and for example, if a system bandwidth is 10 MHz, each PRG is formed of three PRBs. In contrast, according to the present embodiment, the downlink data channel transmitted in the downlink control channel area is assigned in units of a CCE or a REG used in the downlink control channel area, and resource sharing between the DCI and the downlink data channel can be achieved.

The resource assignment indication unit 120 transmits resource assignment information for data information to the user equipment 200 by control information. Specifically, the resource assignment indication unit 120 transmits the resource assignment information, which is indicative of resource assignment of a downlink data channel, to the user equipment 200 in the DCI. For example, the resource assignment information may indicate assignment of the data information per a resource assignment unit, and as illustrated in FIG. 8, the resource assignment indication unit 120 may transmit bitmap information, which is indicative of presence of assignment of the downlink data channel to respective CCEs, to the user equipment 200 in the DCI. In the illustrated example, the downlink data channel is assigned to CCE#6 to CCE#9, and the bitmap information includes "000000111100". Upon receiving the DCI, the user equipment 200 extracts the resource assignment information from the DCI and receives the downlink data channel in the downlink control channel area based on the extracted resource assignment information. The user equipment 200 can receive the downlink data channel in the downlink control channel area through reception of the bitmap information, which is indicative of presence of assignment of the downlink data channel, in the DCI.

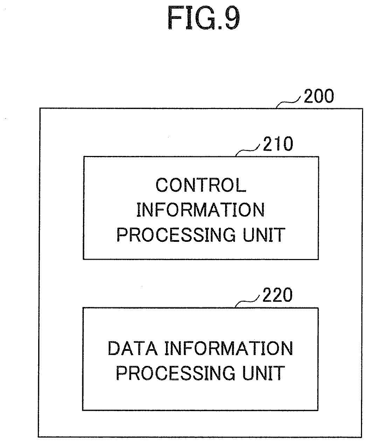

Next, a user equipment according to one embodiment of the present invention is described with reference to FIG. 9. FIG. 9 is a block diagram for illustrating a functional arrangement of the user equipment according to an embodiment of the present invention.

As illustrated in FIG. 9, the user equipment 200 is provided with a control information processing unit 210 and a data information processing unit 220.

The control information processing unit 210 processes control information received from the base station 100. Specifically, the control information processing unit 210 receives the DCI in several CCEs from the leading CCE and extracts resource assignment information, which is indicative of resource assignment of a downlink data channel, from the received DCI. For example, the resource assignment information may indicate assignment of data information per a resource assignment unit and may be bitmap information indicative of presence of assignment of the downlink data channel in respective CCEs, as illustrated in FIG. 8.

The data information processing unit 220 receives data information from the base station 100 in accordance with resource assignment information for the data information in the control information. Here, in the present embodiment, the control information and the data information are assigned in units of a resource assignment unit (for example, a CCE or a REG) of a common resource area (for example, a downlink control channel area). Specifically, the data information processing unit 220 identifies the resources in which the data information is transmitted based on the resource assignment information provided from the control information processing unit 210 and receives the data information in the identified resources. For example, as illustrated in FIG. 8, if the resource assignment information is bitmap information indicative of transmission of a downlink data channel in CCE#6 to CCE#9, the data information processing unit 220 receives the downlink data channel in CCE#6 to CCE#9 in the downlink control channel area.

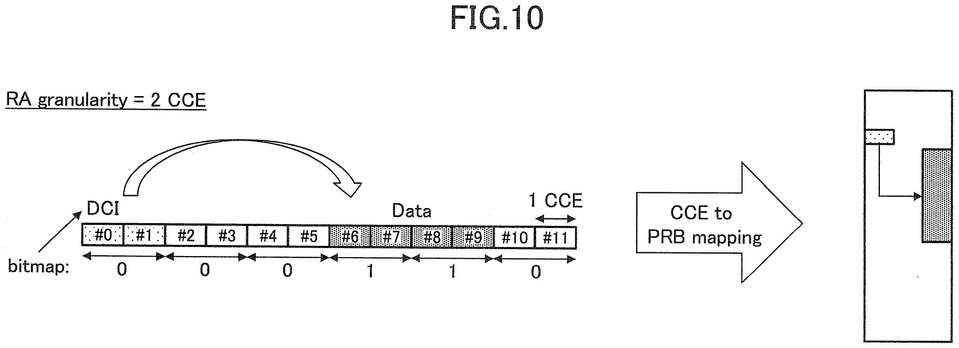

In one embodiment, the resource assignment information may indicate assignment of the data information per multiple resource assignment units. Then, the resource assignment indication unit 120 indicates the number of units for the multiple resource assignment units to the user equipment 200, and the control information processing unit 210 receives the indicated number of units for the multiple resource assignment units. Specifically, as illustrated in FIG. 10, the resource assignment may be performed per multiple CCEs so as to reduce a bitmap size. In the illustrated example, two CCEs are configured as the resource assignment unit, and the DCI and the downlink data channel assigned similarly as in FIG. 8 can be represented with bitmap information "000110" having a smaller number of bits. The number of aggregated resource units may be referred to as a resource aggregation (RA) granularity, and the RA granularity may be predetermined, for example, based on a bandwidth, the total number of CCEs or the like, similar to aggregation levels. Alternatively, the RA granularity may be configured by DCI or upper layer signaling. According to the present embodiment, the bitmap size can be reduced.

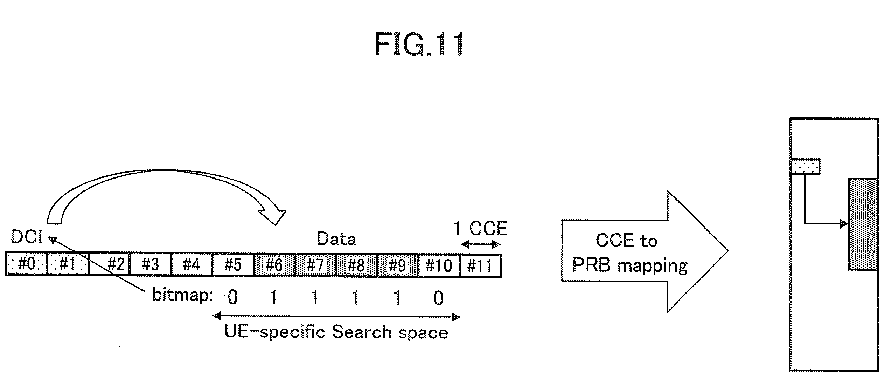

Additionally, in an embodiment, the scheduling unit 110 may assign data information to a search space specific to the user equipment 200, and then, the data information processing unit 220 may receive the data information in the search space specific to the user equipment 200. Specifically, as illustrated in FIG. 11, if the search space specific to the user equipment 200 (US-SS) is configured, the scheduling unit 110 assigns a downlink data channel to only the US-SS. In this case, the resource assignment indication unit 120 is not required to indicate presence of assignment of the downlink data channel to respective CCEs in the entire CCE range in the resource assignment information. The resource assignment indication unit 120 is only required to indicate presence of assignment of the downlink data channel to respective CCEs in the US-SS. For example, in the illustrated example, the US-SS is configured for CCE#5 to CCE#10, and the resource assignment information can be represented with bitmap information "011110" having a smaller number of bits for indicating the presence of assignment of the downlink data channel to respective CCEs in CCE#5 to CCE#10. Note that although the RA granularity is set to one in the illustrated example, the RA granularity is not limited thereto and may be higher than or equal to two, similar to the example as illustrated in FIG. 10. According to the present embodiment, the bitmap size can be reduced.

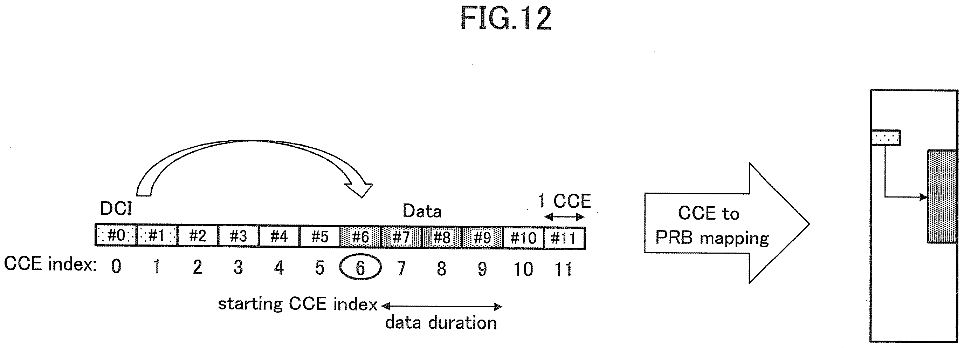

Furthermore, in one embodiment, the resource assignment information may indicate a start resource assignment unit and a number of units for resource assignment units assigned for data information. Specifically, as illustrated in FIG. 12, if a downlink data channel is assigned to CCE#6 to CCE#9, the resource assignment indication unit 120 may transmit the resource assignment information, which is indicative of start CCE#6 and four as the number of CCEs, to the user equipment 200. Upon receiving the resource assignment information, the data information processing unit 220 can determine that the downlink data channel is transmitted in the four CCEs from start CCE#6 and receive the downlink data channel in CCE#6 to CCE#9. According to the present embodiment, if the downlink data channel is assigned to consecutive CCEs, the resource assignment information can be represented with a smaller number of bits than bitmap information.

Note that DCI, upper layer signaling or broadcast information may indicate which of the above-stated various types of resource assignment information is used. Additionally, in the above-stated embodiments, although the downlink data channel is assigned per one or more CCEs similar to the DCI, the downlink data channel is not limited thereto and may be assigned in different units from the DCI (for example, REGs) .

Additionally, when the downlink data channel is scheduled in TTIs only in a downlink control channel area, data scheduling on a CCE-by-CCE basis may be performed in the downlink control channel area. The reason is that a case is assumed in which a downlink data channel is scheduled in a mini-slot that is assigned only in the downlink control channel area.

Additionally, when the downlink data channel is scheduled in TTIs only in a downlink data channel area, data scheduling on a PRB-by-PRB basis or on a PRG-by-PRG basis may be performed in the downlink data channel area, or the data scheduling on the CCE-by-CCE basis may be performed in the downlink data channel area. The specification may define which resource unit type of data scheduling is applied. Alternatively, the resource unit type of data scheduling to be applied may be configured by DCI, upper layer signaling or broadcast information.

Additionally, if the downlink data channel is scheduled in TTIs including the downlink control channel area, data scheduling on a CCE-by-CCE basis may be performed in the downlink control channel area whereas data scheduling on a PRB-by-PRB basis or on a PRG-by-PRG basis may be performed in a downlink data channel area. Additionally, data scheduling on a CCE-by-CCE basis may be performed in the entire area of the downlink control channel area and the downlink data channel area. The specification may define which resource unit type of data scheduling is applied. Alternatively, the type of data scheduling to be applied may be configured by DCI, upper layer signaling or broadcast information. Additionally, if data scheduling on a basis of CCE-by-CCE basis is performed in the entire area, the RA granularity may be the same or different for the downlink control channel area and the downlink data channel area. For example, since the downlink control channel area coexists with the DCI, bitmap information having a finer granularity unit (for example, one CCE) is transmitted. However, since the downlink data channel area does not coexist with the DCI, data assignment per multiple CCEs (for example, four CCEs) may be applied. The granularity may be defined in the specification. Alternatively, the specification may define which resource unit types of data scheduling is applied. Alternatively, the resource unit type of data scheduling to be applied may be configured by DCI, upper layer signaling or broadcast information.

Here, the block diagrams for use in the above description of embodiments show blocks for functional units. These functional blocks (components) are implemented in any combination of hardware and/or software items. Additionally, the implementations of the respective functional blocks are not particularly limited. In other words, the respective functional blocks may be implemented in a physically and/or logically coupled single device or in multiple devices where two or more physically and/or logically separated devices are connected directly and/or indirectly (for example, in wired and/or wireless manners).

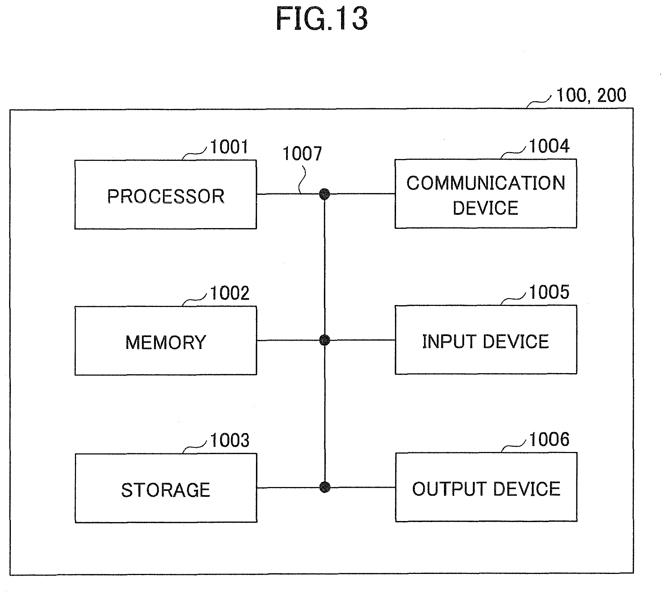

For example, the base station 100 and the user equipment 200 according to one embodiment of the present invention may function as a computer processing the radio communication method according to the present invention. FIG. 13 is a block diagram for illustrating a hardware configuration of the base station 100 and the user equipment 200 according to one embodiment of the present invention. The base station 100 and the user equipment 200 as stated above may each be physically arranged as a computer device including a processor 1001, a memory 1002, a storage 1003, a communication device 1004, an input device 1005, an output device 1006, a bus 1007 or the like.

Note that the term "apparatus" can be interchangeably read as a circuit, a device, a unit or the like. The hardware configuration of the base station 100 and the user equipment 200 may each be arranged to include one or more of the illustrated devices or without including a part of the devices.

Respective functions in the base station 100 and the user equipment 200 are implemented by loading a predetermined software item (program) into hardware items such as the processor 1001 and the memory 1002 to cause the processor 1001 to execute operations, perform communication with the communication device 1004 and control read and/or write operations on data from/in the memory 1002 and the storage 1003.

The processor 1001 runs an operating system to control the whole computer, for example. The processor 1001 may be arranged with a central processing unit (CPU) including an interface with a peripheral device, a control device, a calculation device, a register and the like. For example, the above-stated components may be implemented in the processor 1001.

Additionally, the processor 1001 loads programs (program codes), software modules and data from the storage 1003 and/or the communication device 1004 into the memory 1002 and executes various operations in accordance with them. As the programs, programs for causing the computer to perform at least a part of operations as described in the above embodiments are used. For example, operations by the components in the base station 100 and the user equipment 200 may be implemented with control programs stored in the memory 1002 and executed by the processor 1001, and other functional blocks may be similarly implemented. It is described that the above-stated various operations are performed by the single processor 1001, but they may be performed with two or more processors 1001 simultaneously or sequentially. The processor 1001 may be implemented with one or more chips. Note that the programs may be transmitted from a network via an electric communication line.

The memory 1002 is a computer-readable storage medium and may be arranged with at least one of a ROM (Read Only Memory), an EPROM (Erasable Programmable ROM), an EEPROM (Electrically Erasable Programmable ROM), a RAM (Random Access Memory) or the like, for example. The memory 1002 may be referred to as a register, a cache, a main memory (main storage device) or the like. The memory 1002 can store programs (program codes), software modules or the like that can be executed to implement the radio communication method according to one embodiment of the present invention.

The storage 1003 is a computer-readable storage medium and may be arranged with at least one of an optical disk such as a CD-ROM (Compact Disc ROM), a hard disk drive, a flexible disk, a magnetic optical disk (for example, a compact disk, a digital versatile disk, a Blu-ray (registered trademark) disk), a smart card, a flash memory (for example, a card, a stick, a key drive), a floppy (registered trademark), a magnetic strip or the like. The storage 1003 may be referred to as an auxiliary storage device. The above-stated storage medium may be a database or a server including the memory 1002 and/or the storage 1003 or any other appropriate medium.

The communication device 1004 is a hardware item (transceiver device) for communication over computers via a wired and/or wireless network and may be also referred to as a network device, a network controller, a network card, a communication module or the like. For example, the above-stated components may be implemented in the communication device 1004.

The input device 1005 is an input device for receiving external inputs (for example, a keyboard, a mouse, a microphone, a switch, a button, a sensor or the like). The output device 1006 is an output device for providing external outputs (for example, a display, a speaker, a LED ramp or the like). Note that the input device 1005 and the output device 1006 may be integrally arranged (for example, a touch panel).

Additionally, the respective devices such as the processor 1001 and the memory 1002 are connected with each other via the bus 1007 for communicating information. The bus 1007 may be arranged with a single bus or different buses for different devices.

Additionally, the base station 100 and the user equipment 200 may be arranged to include a hardware item such as a macro processor, a digital signal processor (DSP), an ASIC (Application Specific Integrated Circuit), a PLD (Programmable Logic Device), a FPGA (Field Programmable Gate Array) or the like, and a part or all of the functional blocks may be implemented in the hardware item. For example, the processor 1001 may be implemented with at least one of these hardware items.

Transmission of information is not limited to the embodiments/implementations as described in the present specification and may be made in any other manner. For example, information may be transmitted in physical layer signaling (for example, DCI (Downlink Control Information) and UCI (Uplink Control Information)), upper layer signaling (for example, RRC (radio Resource Control) signaling, MAC (medium Access Control) signaling, broadcast information (MIB (master Information Block) and SIB (System Information Block)) or any other signal or combinations thereof. Also, the RRC signaling may be referred to as an RRC message and may be an RRC Connection Setup message, an RRC Connection Reconfiguration message or the like.

The respective embodiments/implementations as described in the present specification may be applied to systems using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark) or any other appropriate system or next-generation systems enhanced based on them.

Procedures, sequences, flowcharts or the like of the respective embodiments/implementations as described in the present specification may be permutable, as long as there is not inconsistency. For example, for methods as described in the present specification, various steps are presented in an exemplary order, and the present invention is not limited to the presented certain order.

Certain operations performed by the base station 100 as described in the present specification may be performed by its upper node in some cases. In a network including one or more network nodes having base stations, various operations performed to communicate with terminals may be apparently performed by the base stations and/or network nodes other than the base stations (for example, a MME or an S-SW can be assumed, but the network nodes are not limited to them) . Although it has been described that the single network node other than the base stations is used in the above example, combinations of multiple other network nodes (for example, an MME and an S-GW) may be used.

Information and others may be output from an upper layer (or a lower layer) to a lower layer (or an upper layer) . They may be input and output via multiple network nodes.

Incoming and outgoing information and others may be stored in a certain location (for example, a memory) and/or managed in a management table. The incoming and outgoing information and others may be overwritten, updated or added. The outgoing information and others may be deleted. The incoming information and others may be transmitted to other device.

Determination may be made with a one-bit value (0 or 1), a Boolean value (true or false) or numerical comparison (for example, comparison with a predetermined value).

The embodiments/implementations as described in the present specification may be used singularly or in combinations or switched in connection with execution. Also, indication of predetermined information (for example, indication "it is X") is not limited to explicit manners and may be performed implicitly (for example, the predetermined information is not indicated).

Although the present invention is described in detail, it is apparent to those skilled in the art that the present invention is not limited to the embodiments as described in the present specification. The present invention can be implemented as modifications and variations without departing from the sprit and scope of the present invention as defined in claims. Thus, the description in the present specification is intended for exemplary description and does not mean any restriction to the present invention.

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function or the like regardless of the software being referred to as software, a firmware, a middleware, a microcode, a hardware descriptive language or other names.

Additionally, the software, the instruction or the like may be transmitted and received via a transmission medium. For example, if the software is transmitted from a website, a server or other remote sources by using wired techniques such as a coaxial cable, an optical fiber cable, a twist pair and a digital subscriber line (DSL) and/or wireless techniques such as infrared, radio frequency and microwave, these wired techniques and/or wireless techniques are included within definition of a transmission medium.

Information, signals or the like as described in the present specification may be represented with use of any of various different techniques. For example, data, an instruction, a command, information, a signal, a bit, a symbol, a chip and so on referred to throughout the above description may be represented with a voltage, a current, an electromagnetic wave, a magnetic field, a magnetic particle, an optical field, a photon or any combination thereof.

Note that terminologies described in the present specification and/or terminologies required to understand the present specification may be replaced with terminologies having the same or similar meanings. For example, a channel and/or a symbol may be a signal. Also, the signal may be a message. Also, a component carrier (CC) may be referred to as a carrier frequency, a cell or the like.

The terminologies "system" and "network" for use in the present specification are interchangeably used.

Additionally, information, a parameter and so on as described in the present specification may be represented with an absolute value, a relative value from a predetermined value or other corresponding information. For example, a radio resource may be specified with an index.

Names as used for the above-stated parameters are not restrictive from any standpoint. Furthermore, there are some cases where formulae and so on using these parameters may be different from ones as explicitly disclosed in the present specification. Various channels (for example, a PUCCH, a PDCCH or the like) and information elements (for example, a TPC or the like) can be identified with any preferred names, and the various names assigned to these various channels and information elements are not restrictive from any standpoint.

Abase station can accommodate one or more (for example, three) cells (also referred to as sectors). If the base station accommodates multiple cells, the whole coverage area of the base station can be segmented into multiple smaller areas, and the respective smaller areas can provide communication services with a base station subsystem (for example, indoor small base station RRH: Remote Radio Head). The terminology "cell" or "sector" indicates a part or whole of the coverage area of the base station providing communication services in the coverage and/or the base station subsystem. Furthermore, the terminologies "base station", "eNB", "cell" and "sector" can be interchangeably used in the present specification. The base station may be referred to as terminologies such as a fixed station, a NodeB, an eNodeB (eNB), an access point, a femtocell and a small cell.

A mobile station may be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or any other appropriate terminologies.

There are some cases where terminologies "determining" as used in the present specification may include various operations. The "determining" may include calculating, computing, processing, deriving, investigating, looking up (for example, looking up a table, a database or other data structures) and ascertaining, for example. Also, the "determining" may include receiving (for example, receiving information), transmitting (for example, transmitting information), inputting, outputting and accessing (for example, accessing data in a memory) . Also, the "determining" may include resolving, selecting, choosing, establishing, comparing or the like. In other words, the "determining" may include any operation.

The terminologies "connected", "coupled" or all variations thereof mean direct or indirect connection or coupling between two or more elements and can include existence of one or more intermediate elements between two mutually "connected" or "coupled" elements. The coupling or connection between elements may be physical, logical or in combinations thereof. If they are used in the present specification, it can be considered that two elements are mutually "connected" or "coupled" with use of one or more electric wires, cables and/or print electric connections and as several non-limiting and non-comprehensive examples, with use of electromagnetic energy such as electromagnetic energy having a wavelength of a radio frequency domain, a microwave domain and an optical (both visible and invisible) domain.

A reference signal can be abbreviated as a RS (Reference Signal) and may be referred to as a pilot depending on applied standards.

The recitation "based on" as used in the present specification does not mean "only based on", unless specifically stated otherwise. In other words, the recitation "based on" means both "only based on" and "at least based on".

Any reference to elements with use of terminologies such as "first", "second" and so on as used in the present specification does not limit the amount or order of these elements in general. These terminologies can be used in the present specification as convenient manners for distinguishing between two or more elements. Accordingly, the reference to the first and second elements does not mean that only the two elements are used there or the first element has to precede the second element in any fashion.

The terminology "means" in an arrangement of each apparatus as stated above may be replaced with "unit", "circuit", "device" or the like.

As long as the terminologies "include", "including" and variations thereof are used in the present specification or claims, these terminologies are intended to be inclusive similar to the terminology "comprising". Furthermore, the terminology "or" as used in the present specification or claims is intended not to be an exclusive OR.

A radio frame may be arranged with one or more frames in a time domain. In the time domain, one or more frames each may be referred to as a subframe. The subframe may be further arranged with one or more slots in the time domain. The slot may be further arranged with one or more symbols (OFDM symbols, SC-FDMA symbols and so on) in the time domain. Any of the radio frame, the subframe, the slot and the symbol represents a time unit for transmitting signals. The radio frame, the subframe, the slot and the symbol may be referred to in other corresponding manners. For example, in LTE systems, a base station performs scheduling to assign radio resources (frequency bandwidths, transmission power and so on available in the mobile station) to mobile stations. The minimum time unit for scheduling may be referred to as a TTI (Transmission Time Interval) . For example, one subframe, multiple contiguous subframes or one slot may be referred to as the TTI. A resource block (RB) may be a resource assignment unit in the time domain and the frequency domain and may include one or more contiguous subcarriers in the frequency domain. Also, in the time domain, the resource block may include one or more symbols and have one slot, one subframe or one TTI in length. The single TTI and subframe each may be arranged with one or more resource blocks. The above-stated arrangement of radio frame is merely exemplary, and the number of subframes in the radio frame, the number of slots in the subframe, the number of symbols and resource blocks in the slot and the number of subcarriers in the resource block can be changed in any manner.

Although the embodiments of the present invention are described in detail above, the present invention is not limited to the above-described specific embodiments, and various modifications and variations can be made within the spirit of the present invention as recited in claims.

This patent application is based on and claims priority to Japanese Patent Application No. 2017-019116 filed on February 3, 2017, the entire content of Japanese Patent Application No. 2017-019116 is hereby incorporated by reference.

### LIST OF REFERENCE SYMBOLS

- 10: radio communication system
- 100: base station
- 110: scheduling unit
- 120: resource assignment indication unit
- 200: user equipment
- 210: control information processing unit
- 220: data information processing unit

## Claims

1. A base station, comprising:
a scheduling unit configured to assign control information and data information in units of a resource assignment unit in a common resource area, wherein the control information and the data information are to be transmitted to a user equipment in the common resource area; and
a resource assignment indication unit configured to transmit resource assignment information of the data information to the user equipment by the control information.

2. The base station according to claim 1, wherein the resource assignment information indicates assignment of the data information per a resource assignment unit.

3. The base station according to claim 1, wherein the resource assignment information indicates assignment of the data information per multiple resource assignment units, and the resource assignment indication unit indicates a number of units of the multiple resource assignment units to the user equipment.

4. The base station according to any one of claims 1 to 3, wherein the scheduling unit assigns the data information to a search space specific to the user equipment.

5. The base station according to claim 1, wherein the resource assignment information indicates a start resource assignment unit and a number of units of resource assignment units assigned to the data information.

6. A user equipment, comprising:
a control information processing unit configured to process control information received from a base station; and
a data information processing unit configured to receive data information from the base station in accordance with resource assignment information for the data information in the control information,
wherein the control information and the data information are assigned in units of a resource assignment unit in a common resource area.

7. The user equipment according to claim 6, wherein the resource assignment information indicates assignment of the data information per a resource assignment unit.

8. The user equipment according to claim 6, wherein the resource assignment information indicates assignment of the data information per multiple resource assignment units, and the control information processing unit receives a number of units of the multiple resource assignment units from the base station.

9. The user equipment according to any one of claims 6 to 8, wherein the data information processing unit receives the data information in a search space specific to the user equipment.

10. The user equipment according to claim 6, wherein the resource assignment information indicates a start resource assignment unit and a number of units of resource assignment units assigned for the data information.
